# EUROPÄISCHE PATENTSCHRIFT

(11) **EP 1 050 739 B1**
(45) Veröffentlichungstag und Bekanntmachung des Hinweises auf die Patenterteilung: **18.08.2004**
(21) Anmeldenummer: 00107223.0
(22) Anmeldetag: 01.04.2000
(51) Int. Cl.: G01B 5/28, G01B 5/16

(54) **Vorrichtung zur Prüfung und Anzeige der Masshaltigkeit von zylindrischen Oberflächen und von Verzahnungen**
Device for testing and indicating the dimensional accuracy of cylindrical surface and of toothing
Dispositif pour tester et indiquer la tenue de cotes de surface de cylindre et d'engrenage

(30) Priorität: 28.04.1999 DE 19919299
(43) Veröffentlichungstag der Anmeldung: 08.11.2000
(73) Patentinhaber: Frenco Verzahnungstechnik. Messtechnik GmbH, 90518 Altdorf (DE)
(72) Erfinder: Och, Rudolf, 90475 Nürnberg (DE)
(74) Vertreter: Brose, Manfred, Dr.

(56) Entgegenhaltungen:
- DE-A- 3 246 691
- DE-A- 3 330 018
- DE-U- 9 003 357
- US-A- 4 573 272
- PATENT ABSTRACTS OF JAPAN vol. 1996, no. 06, 28. Juni 1996 (1996-06-28) & JP 08 043007 A (TOSOK CORP), 16. Februar 1996 (1996-02-16)
- PATENT ABSTRACTS OF JAPAN vol. 014, no. 258 (P-1055), 4. Juni 1990 (1990-06-04) & JP 02 069601 A (TOKYO SEIMITSU CO LTD), 8. März 1990 (1990-03-08)
- PATENT ABSTRACTS OF JAPAN vol. 014, no. 381 (P-1093), 16. August 1990 (1990-08-16) & JP 02 143102 A (MITSUTOYO CORP), 1. Juni 1990 (1990-06-01)
- PATENT ABSTRACTS OF JAPAN vol. 006, no. 166 (P-138), 31. August 1982 (1982-08-31) & JP 57 082701 A (TOYOTA AUTO BODY CO LTD;OTHERS: 02), 24. Mai 1982 (1982-05-24)

## Beschreibung

Die Erfindung betrifft eine Vorrichtung zur Prüfung und Anzeige der Maßhaltigkeit von zylinderartigen Oberflächen und von Verzahnungen nach dem Oberbegriff von Anspruch 1.

Aus der DE 31 09 334 C2 (Frenco) ist eine gattungsgemäße Vorrichtung bekannt, bestehend aus einem Meßkopf, in dem ein zylinderartiges Tragelement für zwei einander diametral gegenüberliegenden und an der zu prüfenden Oberfläche oder an der Verzahnung anliegenden Prüfgliedern gelagert ist, wobei die durch Unregelmäßigkeiten der Oberfläche oder der Verzahnung verursachten radialen Bewegungen der Prüfglieder auf eine auf den Prüfgliedern senkrecht stehende und in einer zentralen Bohrung des Tragelementes verschiebbaren Triebnadel übertragen werden und die Verschiebung der Triebnadel von einem Maßtaster angezeigt wird. Dieser Vorrichtung haftet jedoch der Nachteil an, daß die Meßebene der Prüfglieder im Werkstück nicht von der Vorrichtung selbst gemessen werden kann.

Aus der DE 90 03 357 U1(Künz) ist ein Meßgerät zum Messen des Durchmessers und der axialen Lage einer innenliegenden Ringnut bekannt, wobei sich die Ringnut in der zylinderförmigen Innenwand eines Werkstückes befindet. Sowohl die möglichen radialen als auch die axialen Maße der Ringnut können sich nur in engen Toleranzbereichen bewegen. Das Meßgerät hat daher auch nur einen sehr engen Einsatzbereich. Das Meßgerät ist daher nicht in der Lage, die Maßhaltigkeit des Innendurchmessers eines längeren zylinderförmigen Raumes in Abhängigkeit von der axialen Lage zu messen.

Aus der DE 44 12 069 A1(Straube) ist eine von Hand betätigbare Vorrichtung zur Feststellung von Abweichungen einer Bohrung von der Zylinderform bekannt, die für die Vermessung von relativ großen zylinderförmigen Innendurchmessern, beispielsweise von Zylinderlaufbuchsen, vorgesehen ist. Hierbei wird auch gleichzeitig die axiale Position der Meßwertaufnehmer ermittelt. Da die gesamte Meßvorrichtung in die Bohrung eingeführt werden muß, ist diese nur zur Vermessung zylinderförmiger Räume mit großem Innendurchmesser anwendbar.

Der Erfindung liegt daher die Aufgabe zugrunde, eine Vorrichtung zur Prüfung der Maßhaltigkeit von zylinderförmigen Oberflächen oder Verzahnungen zu schaffen, die auch bei einem großen Verhältnis von Länge zu Durchmesser der Zylinderförmigen Oberfläche einsetzbar ist und in der Lage ist, die Maßhaltigkeit über etwa die gesamte Länge auszumessen.

In den abhängigen Ansprüchen werden Fortbildungen und Ausgestaltungen der Erfindung nach Anspruch 1 beansprucht.

In den Zeichnungen ist ein Ausführungsbeispiel der Erfindung wiedergegeben. Es zeigen :
- Fig. 1: eine Seitenansicht der Vorrichtung, teilweise im Schnitt,
- Fig. 2: einen Längsschnitt durch die Vorrichtung,
- Fig. 3: einen Schnitt durch die Vorrichtung nach der Linie III - III von Figur 2,
- Fig. 4: eine Draufsicht auf den Wegtaster und
- Fig. 5: eine Draufsicht auf den Wegmaßstab.

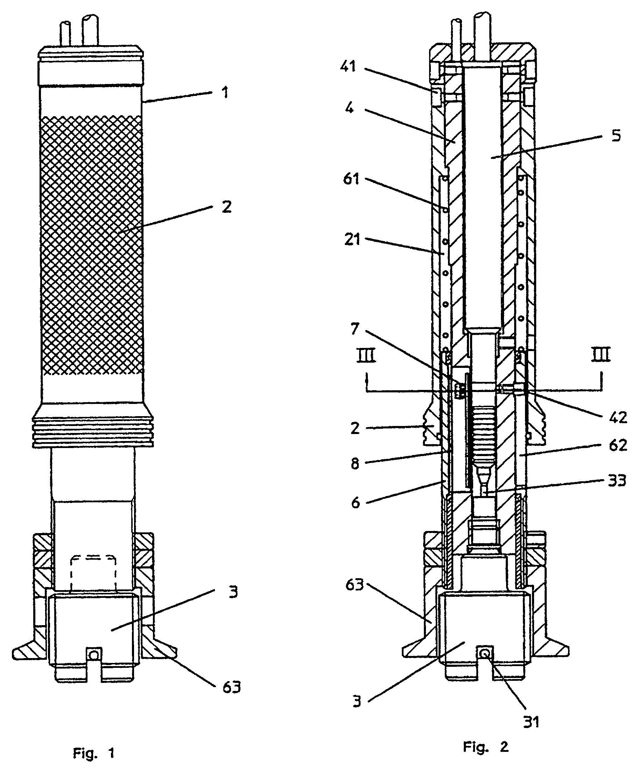

Die Vorrichtung 1 zur Prüfung und Anzeige der Maßhaltigkeit von zylinderartigen Oberflächen und von Verzahnungen besteht aus einem zylinderförmigen Handgriff 2 mit einem Meßkopf 3. In dem Meßkopf 3 ist ein zylinderartiges Tragelement für zwei einander diametral gegenüberliegenden und an der zu prüfenden Oberfläche oder an der Verzahnung anliegenden Prüfgliedern 31 gelagert. Von den einander diametral gegenüberliegenden Prüfgliedern ist in den Figuren 1, 2 nur das eine Prüfglied 31 sichtbar, das andere Prüfglied 32 ist zeichnerisch nicht dargestellt. Die durch Unregelmäßigkeiten der Oberfläche oder der Verzahnung verursachten radialen Bewegungen der Prüfglieder 31, 32 werden auf eine auf den Prüfgliedern 31, 32 senkrecht stehende und in einer zentralen Bohrung des Tragelementes verschiebbaren Triebnadel 33 übertragen.

Mit dem Handgriff 2 ist ein Innenzylinder 4 starr verbunden, beispielsweise durch Schrauben 41. Am freien Ende des Innenzylinders 4 ist der Meßkopf 3 und am anderen Ende in dem Innenzylinder 4 der Maßtaster 5 gelagert. Die Verschiebung der Triebnadel 33 wird durch den Maßtaster 5 angezeigt. Zwischen dem Handgriff 2 und dem Innenzylinder 4 befindet sich ein zylinderförmiger Raum 21, in dem ein dritter Zylinder 6 gegen den Druck einer Feder 61 verschiebbar gelagert ist. Das Maß der Verschiebung kann durch einen Wegtaster 7 gemessen werden. Hierbei mißt der am Innenzylinder 4 gelagerte Wegtaster 7 die Größe der Verschiebung an einem auf der Innenseite des dritten Zylinders 6 gelagerten Maßstab 8. Maßtaster 5 und Wegtaster 7 sind jeweils elektronische Bauelemente, deren Meßwerte mit einer EDV-Anlage verarbeitet werden können. Der Wegtaster 7 ist in einer Draufsicht auf Figur 4 und der Maßstab auf Figur 5 dargestellt.

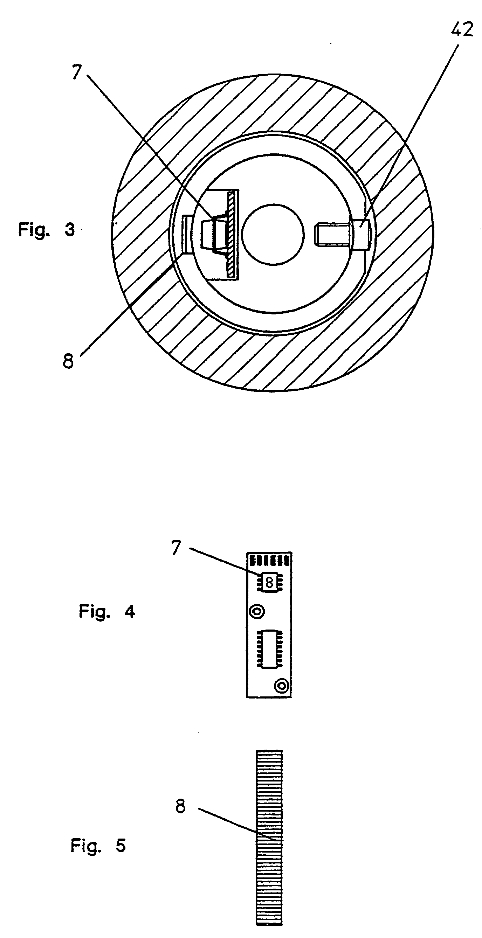

Ein Verdrehen des dritten Zylinders 6 gegenüber dem Innenzylinder 4 und dem Handgriff 2 wird durch eine Sicherung verhindert, die aus einem Bolzen 42 am Innenzylinder 4 und einem Längsschlitz 62 im dritten Zylinder 6, in den der Bolzen 42 hineinragt, besteht (siehe Figur 3).

Am freien Ende des dritten Zylinders 6 sind Stützen 63 zur senkrechten Positionierung der Vorrichtung 1 auf einem zu prüfenden Werkstück angeordnet. Nach dem Aufsetzen der Vorrichtung 1 mit den Stützen 63 auf das Werkstück, kann durch vertikalen Druck auf den Handgriff 2 der Meßkopf 3 in das Werkstück eingefahren werden, wobei die Maßgenauigkeit in Abhängigkeit von der Einfahrtiefe gemessen wird und auf dem Bildschirm einer EDV-Anlage dargestellt werden kann.

### Bezugszeichenliste

- 1: Vorrichtung
- 2: Handgriff
- 21: zylinderförmiger Raum
- 3: Meßkopf
- 31: Prüfglied
- 32: Prüfglied
- 33: Triebnadel
- 4: Innenzylinder
- 41: Schrauben
- 42: Bolzen
- 5: Maßtaster
- 6: dritter Zylinder
- 61: Feder
- 62: Längsschlitz
- 63: Stützen
- 7: Wegtaster
- 8: Wegmaßstab

## Patentansprüche

1. Vorrichtung (1) zur Prüfung und Anzeige der Maßhaltigkeit von zylinderartigen Oberflächen und von Verzahnungen, bestehend aus einem Meßkopf (3), in dem ein zylinderartiges Tragelement für zwei einander diametral gegenüberliegenden und an der zu prüfenden Oberfläche oder an der Verzahnung anliegenden Prüfgliedern (31, 32) gelagert ist, wobei die durch Unregelmäßigkeiten der Oberfläche oder der Verzahnung verursachten radialen Bewegungen der Prüfglieder (31, 32) auf eine auf den Prüfgliedern senkrecht stehende und in einer zentralen Bohrung des Tragelementes verschiebbaren Triebnadel (33) übertragen werden und die Verschiebung der Triebnadel (33) von einem Maßtaster (5) angezeigt wird, einem zylinderförmigen Handgriff und einem Innenzylinder (4), wobei am freien Ende des Innenzylinders (4) der Meßkopf (3) und am anderen Ende in dem Innenzylinder (4) der Maßtaster (5) gelagert ist und eine axiale Verschiebung des Maßtasters gegenüber der zylinderartigen Oberfläche oder der Verzahnung durch einen Wegtaster (7) meßbar ist,
**gekennzeichnet durch**
den mit dem Handgriff starr verbundenen Innenzylinder (4) und einem zylinderförmigen Raum (21) zwischen Handgriff (2) und Innenzylinder (4), in dem ein dritter Zylinder (6) gegen den Druck einer Feder (61) verschiebbar gelagert ist, wobei die gegenseitige Verschiebung zwischen Innenzylinder (4) und dem dritten Zylinder (6) **durch** den Wegtaster (7) meßbar ist.

2. Vorrichtung nach Anspruch 1, **dadurch gekennzeichnet,**
**daß** Maßtaster (5) und Wegtaster (7) jeweils elektronische Bauelemente sind.

3. Vorrichtung nach Anspruch 1 oder 2, **gekennzeichnet durch** eine Sicherung (42, 62) die ein Verdrehen des dritten Zylinders (6) gegenüber dem Handgriff (2) und dem Innenzylinder (4) verhindert.

4. Vorrichtung nach einem der Ansprüche 1 bis 3, **gekennzeichnet durch** am freien Ende des dritten Zylinders (6) angeordnete Stützen (63) zur senkrechten Positionierung der Vorrichtung (1) auf einem zu prüfenden Werkstück.

## Claims

1. Device (1) for the checking and indication of the accuracy to size of cylindrical surfaces and of toothings, consisting of a measuring head (3), in which a cylindrical support element for two diametrically opposite checking elements (31, 32) bearing against the surface to be checked or against the toothing is mounted, wherein the radial movements of the checking elements (31, 32) caused by irregularities of the surface or the toothing are transmitted to a drive needle (33) standing perpendicularly on the checking elements and displaceable in a central bore of the support element and the displacement of the drive needle (33) is indicated by a measurement sensor (5), a cylindrical handgrip and an inner cylinder (4), wherein the measuring head (3) is mounted at the free end of the inner cylinder (4) and the measurement sensor (5) is mounted at the other end in the inner cylinder (4) and an axial displacement of the measurement sensor relative to the cylindrical surface or the toothing is measurable by a travel sensor (7), **characterised by** the inner cylinder (4) rigidly connected with the handgrip and a cylindrical space (21) between handgrip (2) and inner cylinder (4), in which a third cylinder (6) is mounted to be displaceable against the force of a spring (61), wherein the mutual displacement between inner cylinder (4) and the third cylinder (6) is measurable by the travel sensor (7).

2. Device according to claim 1, **characterised in that** measurement sensor (5) and travel sensor (7) are respective electronic components.

3. Device according to claim 1 or 2, **characterised by** a securing device (42, 62) which prevents a rotation of the third cylinder (6) relative to the handgrip (2) and the inner cylinder (4).

4. Device according to one of claims 1 to 3, **characterised by** supports (63), which are arranged at the free end of the third cylinder (6), for vertical positioning of the device (1) on a workpiece to be checked.

## Revendications

1. Dispositif (1) de contrôle et d'affichage de l'exactitude dimensionnelle de surfaces cylindriques et de dentures, constitué d'une tête de mesure (3) dans laquelle est monté un élément porteur cylindrique pour deux organes de contrôle (31, 32) diamétralement opposés et s'appliquant sur la surface à contrôler ou sur la denture, les déplacements radiaux des organes de contrôle (31, 32) provoqués par des irrégularités de la surface ou de la denture étant transmis à une aiguille d'entraînement (33) située verticalement sur les organes de contrôle et mobile dans un trou central de l'élément porteur, et le déplacement de l'aiguille d'entraînement (33) étant affiché par un palpeur dimensionnel (5), d'une poignée cylindrique et d'un cylindre intérieur (4), la tête de mesure (3) étant montée à l'extrémité libre du cylindre intérieur (4) et le palpeur dimensionnel (5) étant monté à l'autre extrémité dans le cylindre intérieur (4), et un déplacement axial du palpeur dimensionnel par rapport à la surface cylindrique ou à la denture étant mesurable par un palpeur de déplacement (7),
**caractérisé par**
le cylindre intérieur (4) assemblé rigidement avec la poignée et par un espace cylindrique (21) entre la poignée (2) et le cylindre intérieur (4), espace dans lequel un troisième cylindre (6) est monté coulissant contre la pression d'un ressort (61), le déplacement mutuel entre le cylindre intérieur (4) et le troisième cylindre (6) étant mesurable par le palpeur de déplacement (7).

2. Dispositif suivant la revendication 1, **caractérisé en ce que** le palpeur dimensionnel (5) et le palpeur de déplacement (7) sont chacun des composants électroniques.

3. Dispositif suivant l'une des revendications 1 et 2, **caractérisé par** un blocage (42, 62) qui empêche une rotation du troisième cylindre (6) par rapport à la poignée (2) et au cylindre intérieur (4).

4. Dispositif suivant l'une des revendications 1 à 3, **caractérisé par** des supports (63) disposés sur l'extrémité libre du troisième cylindre (6) pour le positionnement vertical du dispositif (1) sur une pièce à contrôler.
